# FASCICULE DE BREVET EUROPEEN

(11) **EP 4 102 273 B1**
(45) Date de publication et mention de la délivrance du brevet: **17.04.2024**
(21) Numéro de dépôt: 22176939.1
(22) Date de dépôt: 02.06.2022
(51) Int. Cl.: G02B 6/12, G02B 6/124, G02B 6/30

(54) **COMPOSANT OPTIQUE INTÉGRÉ PRÉSENTANT UN FAISCEAU DE LUMIÈRE ÉLARGI**
INTEGRIERTE OPTISCHE KOMPONENTE MIT EINEM VERBREITERTEN LICHTSTRAHL
INTEGRATED OPTICAL COMPONENT HAVING A WIDE LIGHT BEAM

(30) Priorité: 11.06.2021 FR 2106181
(43) Date de publication de la demande: 14.12.2022
(73) Titulaire: Commissariat à l'énergie atomique et aux énergies alternatives, 75015 Paris (FR)
(72) Inventeur: CASTANY, Olivier, 38054 GRENOBLE Cedex 09 (FR)
(74) Mandataire: Hautier IP

(56) Documents cités:
- US-A1- 2019 265 421
- US-A1- 2021 165 165

## Description

### DOMAINE TECHNIQUE

Le domaine de l'invention est celui de la photonique intégrée sur puce. L'invention concerne plus particulièrement le couplage optique d'une puce photonique avec un dispositif extérieur, par exemple avec une autre puce photonique, une fibre optique ou un ensemble de fibres optiques.

### ETAT DE LA TECHNIQUE

Les composants d'optique intégrée, en particulier les composants de la photonique sur silicium, peuvent combiner de nombreuses fonctions sur une même puce, également appelée PIC, de l'acronyme anglais signifiant « photonic integrated circuit ». Dans ces composants, la lumière est conduite dans des guides optiques de petite taille, d'une largeur typiquement inférieure au micromètre, entre des blocs fonctionnels densément répartis au sein du PIC.

Ces composants optiques intégrés sont destinés à communiquer avec des systèmes extérieurs en échangeant de la lumière par couplage optique. Un enjeu lié au couplage optique est de limiter les pertes optiques. Le couplage est particulièrement délicat dans le cas des faisceaux optiques monomodes, destinés par exemple à être couplés dans des fibres optiques, en raison du faible diamètre des faisceaux de lumière mis en jeu.

En photonique sur silicium, la lumière transportée dans le plan du PIC peut être dirigée hors du plan par des éléments fonctionnels dédiés, comme par exemple des réseaux de diffraction, et couplée à une fibre monomode clivée ou polie faisant un angle avec la verticale, typiquement d'environ 8°.

Les faisceaux lumineux monomodes issus de ces composants optiques présentent généralement un diamètre proche de la dizaine de micromètres. Le couplage direct avec une fibre optique monomode est possible, mais il est cependant délicat car il faut positionner la fibre optique avec une précision inférieure à ±2 µm pour avoir un taux de couplage suffisant et limiter les pertes optiques.

Cette précision de placement est délicate à atteindre et nécessite d'utiliser des machines dédiées, coûteuses et lentes. Pour faciliter le couplage et augmenter la tolérance du positionnement, une solution consiste à élargir le diamètre du faisceau de lumière sortant du composant optique intégré jusqu'à plusieurs dizaines de microns. Par exemple, un faisceau lumineux présentant un diamètre de 50 µm permet d'augmenter la tolérance de positionnement à ±10 µm. Les contraintes d'alignement et de positionnement sont relâchées et il n'est plus nécessaire d'utiliser des machines de haute précision. L'assemblage peut dès lors être réalisé par des machines moins coûteuses et plus rapides.

Le document FR3066617 A1 divulgue une solution permettant d'épanouir le faisceau en bénéficiant de l'épaisseur du substrat sur lequel le composant optique intégré est fabriqué. Le substrat est de type SOI, de l'acronyme anglais signifiant « Silicon On Insulator », et comprend une couche de silice enterrée dite BOX (acronyme anglais signifiant « Burried Oxide »). Un miroir en face arrière du substrat permet de réfléchir le faisceau lumineux en direction de la face avant où est prévu le couplage avec un connecteur optique. La diffraction naturelle du faisceau entraîne un élargissement du faisceau au fur et à mesure que celui-ci se propage au travers du substrat. La longueur du trajet du faisceau dans le substrat détermine ainsi la taille du faisceau obtenu en face avant. Le diamètre du faisceau en face avant est ainsi significativement augmenté.

En pratique, cette solution présente pour inconvénient d'être complexe à fabriquer, ce qui induit un coût relativement élevé. Il existe un besoin consistant à optimiser un tel composant optique intégré.

Les documents US2021/165165 A1 et US2019/265421 A1 divulguent des solutions permettant de coupler un PIC et une fibre optique par l'intermédiaire de miroirs plan et convergent. La précision sur l'assemblage du PIC et de la fibre optique reste assez critique avec ce type de solutions.

Un objectif de la présente invention est de répondre à ce besoin et de proposer un composant optique intégré qui pallie au moins en partie certains des inconvénients précédemment cités.

Les autres objets, caractéristiques et avantages de la présente invention apparaîtront à l'examen de la description suivante et des dessins d'accompagnement. Il est entendu que d'autres avantages peuvent être incorporés. En particulier, certaines caractéristiques et certains avantages du composant optique intégré peuvent s'appliquer *mutatis mutandis* au système optique et/ou au procédé de fabrication de ce composant, et réciproquement.

### RESUME

Pour atteindre cet objectif, selon un mode de réalisation on prévoit un composant optique intégré configuré pour assurer une propagation d'un faisceau lumineux entre un premier port de lumière dit interne et un deuxième port de lumière dit externe. Le faisceau lumineux présente typiquement un axe optique, une première surface coupée prise transversalement à l'axe optique au niveau du premier port de lumière, et une deuxième surface coupée prise transversalement à l'axe optique au niveau du deuxième port de lumière, telles que la taille de la deuxième surface coupée est strictement supérieure, et de préférence au moins trois fois supérieure, à la taille de la première surface coupée. Ce composant optique intégré comprend un composant optique de base comprenant ledit port de lumière interne.

Le composant optique de base présente une première face dite face inférieure et une deuxième face dite face supérieure, opposée à la face inférieure. Le port de lumière interne est configuré pour émettre ou recevoir le faisceau lumineux respectivement de façon divergente ou convergente, selon un trajet passant au travers de la face supérieure.

Avantageusement, le composant optique intégré comprend en outre une couche transparente disposée sur la face supérieure du composant optique de base. Cette couche transparente présente une troisième face en regard de et parallèle à la face supérieure du composant optique de base. La couche transparente comprend le port de lumière externe au niveau de ladite troisième face.

Avantageusement, la couche transparente comprend également un miroir plan situé sur ou au niveau de la troisième face et tourné en regard de la face supérieure du composant optique de base. Le composant optique de base comprend un miroir convergent, par exemple situé sur ou au niveau de la face supérieure, tourné en regard de ladite troisième face de la couche transparente.

De façon avantageuse, les miroirs plan et convergent sont agencés de sorte que le faisceau lumineux se propage entre le port de lumière interne et le port de lumière externe en traversant la couche transparente par réflexion sur le miroir plan et par réflexion sur le miroir convergent.

Ainsi, dans le cas où le port de lumière interne émet un faisceau lumineux divergent, ce faisceau lumineux se propage dans le composant optique de base en direction de la face supérieure, puis dans la couche transparente. Il est ensuite réfléchi par le miroir plan en direction du miroir convergent, puis à nouveau réfléchi par le miroir convergent en direction du port de lumière externe. Le faisceau lumineux s'élargit notamment au sein de la couche transparente lors de son trajet entre le port interne et le miroir plan, puis entre le miroir plan et le miroir convergent. Le miroir convergent peut typiquement agir ensuite comme collimateur pour former un faisceau de lumière parallèle Cela permet d'épanouir le faisceau lumineux de sorte qu'il présente une taille augmentée au niveau du port de lumière externe. Dans le cas d'un faisceau de section circulaire, cela signifie que le diamètre au niveau du port externe est significativement supérieur à son diamètre initial au niveau du port de lumière interne. Le faisceau lumineux est ainsi avantageusement élargi lors de son passage dans la couche transparente. Dans la suite, cette couche transparente est également dénommée « pavé transparent ».

Le composant optique intégré fonctionne également dans le cas où le port de lumière interne est configuré pour recevoir un faisceau lumineux convergent. Selon le principe de retour inverse de la lumière, un faisceau de lumière, de préférence un faisceau parallèle, incident au niveau du port de lumière externe, se propage en direction du miroir convergent, puis est réfléchi vers le miroir plan en un faisceau convergent, puis est réfléchi par le miroir plan en direction du port de lumière interne. Le faisceau parcourant ce trajet se trouve rétréci de sorte qu'il présente un diamètre minimal au niveau du port de lumière interne, significativement inférieur à son diamètre initial au niveau du port de lumière externe.

Dans le cadre du développement de la présente invention, il est apparu que la solution proposée dans le document FR3066617 A1 implique que le faisceau lumineux doit traverser à plusieurs reprises la ou les interfaces entre la silice et le silicium. Le fort contraste d'indice de réfraction entre ces matériaux a pour conséquence qu'une partie non négligeable de la lumière, environ 15%, est réfléchie et donc perdue. L'introduction d'une couche antireflet au niveau des interfaces pourrait améliorer cette solution. Cependant, pour des raisons technologiques, il apparaît délicat et coûteux de placer une telle couche antireflet au niveau des interfaces entre la silice et le silicium dans l'architecture de composant optique intégré proposée par ce document FR3066617 A1. Un autre inconvénient de cette solution connue, qui a été identifié dans le cadre du développement de la présente invention, est lié à la réalisation d'un miroir en face arrière du substrat. Cela implique en particulier de protéger la face avant lors de la fabrication de ce miroir en face arrière, puis de retirer cette protection. Cela augmente le coût de fabrication. Un autre inconvénient également identifié dans le cadre du développement de la présente invention, est que l'épaisseur du substrat, dans le composant optique intégré divulgué par le document FR3066617 A1, ne peut pas être choisie indépendamment du diamètre de faisceau souhaité. Cela entraîne des contraintes de dimensionnement supplémentaires.

Dans la présente invention, le faisceau lumineux ne passe pas par un substrat, ce qui évite les réflexions parasites gênantes. Cela permet de limiter les pertes optiques. Par ailleurs, l'épaisseur du substrat peut être choisie indépendamment de l'épanouissement de faisceau souhaité, par exemple en fonction de contraintes liées à la dissipation thermique ou aux connections électriques.

La réflexion sur le miroir plan n'est pas affectée par une translation latérale du miroir plan, c'est-à-dire une translation dans le plan du miroir plan. Le positionnement latéral du pavé transparent sur le composant optique de base tolère ainsi une imprécision de positionnement supérieure à 2 µm, voire supérieure à 5 µm, voire supérieure à 10 µm. Le pavé transparent peut ainsi être assemblé au composant optique de base en utilisant un équipement de placement de puces (équipement dit de « pick-and-place » en anglais) industriel standard, offrant typiquement une précision de ±10 µm. Cela permet de limiter les coûts de fabrication d'un tel composant optique intégré.

Par ailleurs, le port de lumière externe est typiquement non spécifique et peut être couplé à différents connecteurs optiques standards. Le port de lumière externe se présente typiquement sous forme d'une portion de préférence plane de la troisième face. Le composant optique intégré selon la présente invention peut ainsi se coupler avec différents connecteurs optiques à faisceau élargi. La compatibilité du composant optique intégré avec différents connecteurs optiques est ainsi améliorée.

Un autre aspect de l'invention concerne un système comprenant au moins un composant optique intégré tel que décrit ci-dessus et un connecteur optique couplé au port de lumière externe. Un autre aspect de l'invention concerne un procédé de fabrication d'un composant optique intégré comprenant une formation du composant optique de base sur un premier substrat et une formation de la couche transparente et du miroir plan sur un deuxième substrat, et comprenant un report et un assemblage de ladite couche transparente sur le composant optique de base, ledit assemblage étant effectué à l'aide d'une couche intercalaire polymère. L'architecture du composant optique intégré permet une tolérance de positionnement du pavé transparent sur le composant optique de base suffisamment élevée. Pour des enjeux de coûts et de production industrielle, il est ainsi avantageux de fabriquer séparément des composants optiques de base, par exemple au sein d'une première ligne de production, et une couche ou des pavés transparents comprenant chacun un miroir plan, par exemple au sein d'une deuxième ligne de production, puis de les assembler, typiquement à l'aide d'une couche polymère adhésive. De tels composants optiques intégrés peuvent également être facilement couplés à des connecteurs optiques issus d'une troisième ligne de production.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La figure 1 illustre schématiquement un composant optique intégré selon un mode de réalisation de la présente invention.
La figure 2 illustre schématiquement la propagation d'un faisceau lumineux selon un mode de réalisation de la présente invention.
La figure 3 illustre schématiquement un composant optique de base selon un mode de réalisation de la présente invention.
La figure 4 illustre schématiquement un composant optique intégré selon un autre mode de réalisation de la présente invention.
La figure 5 illustre schématiquement un composant optique intégré selon un autre mode de réalisation de la présente invention.
La figure 6 illustre schématiquement un composant optique intégré selon un autre mode de réalisation de la présente invention.
La figure 7 illustre schématiquement un système d'interconnexion optique selon un mode de réalisation de la présente invention.
La figure 8 illustre schématiquement un système d'interconnexion optique selon un autre mode de réalisation de la présente invention.
La figure 9 illustre schématiquement un système d'interconnexion optique selon un autre mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les dimensions des différents éléments (composants, pavé, miroirs, connecteurs...) ne sont pas nécessairement représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, lesdits miroirs plan et convergent sont agencés de sorte que le faisceau lumineux se propage entre le miroir plan et le miroir convergent sans traverser entièrement, de préférence sans pénétrer dans, une couche comportant le port de lumière interne.

Selon un exemple, lesdits miroirs plan et convergent sont agencés de sorte que le faisceau lumineux se propage entre le miroir plan et le miroir convergent en traversant uniquement le pavé transparent et d'éventuelles couches intercalaires transparentes.

Selon un exemple, en projection le long d'un axe perpendiculaire au miroir plan, le miroir convergent est situé entre le port de lumière interne et le port de lumière externe.

Selon un exemple, le composant optique intégré comprend un substrat et le composant optique de base est porté par le substrat au niveau de la face inférieure.

Selon un exemple, le miroir plan est interposé sur le trajet du faisceau lumineux entre le port de lumière interne et le miroir convergent. Il est notamment parallèle à la face supérieure du composant optique de base. Le fait qu'il soit plan et parallèle à la face supérieure permet d'augmenter la tolérance de placement vis-à-vis du port de lumière interne.

Selon un exemple, le miroir convergent est interposé sur le trajet du faisceau lumineux entre le port de lumière externe et le miroir plan. Cela permet par exemple de renvoyer vers le port de lumière externe un faisceau lumineux à rayons parallèles. Selon un exemple, le miroir convergent présente une distance focale configurée pour renvoyer vers le port de lumière externe un faisceau lumineux à rayons parallèles. Selon un exemple, le miroir convergent est situé au niveau de la face supérieure du composant optique de base.

Selon un exemple, le port de lumière interne est configuré pour que le faisceau lumineux présente des rayons lumineux non parallèles entre eux entre le port de lumière interne et le miroir plan, et entre le miroir plan et le miroir convergent. Le faisceau lumineux peut ainsi s'épanouir ou se rétrécir sur tout le trajet entre le port de lumière interne et le miroir convergent, en fonction du sens propagation du faisceau lumineux. Le faisceau peut notamment s'élargir lors de sa propagation depuis le port de lumière interne vers le miroir plan, et depuis le miroir plan vers le miroir convergent.

Selon un exemple, le miroir convergent est configuré pour que le faisceau lumineux présente des rayons lumineux parallèles entre eux entre le port de lumière externe et ledit miroir convergent. Le faisceau de lumière sortant du port de lumière externe est ainsi collimaté. Cela permet d'améliorer la compatibilité du composant optique intégré avec d'autres éléments, typiquement avec des connecteurs optiques standards. Selon un exemple, le miroir convergent présente une distance focale f comprise entre 0,8.L et 1,2.L, L étant une longueur du trajet du faisceau lumineux se propageant entre le port de lumière interne et le miroir convergent.

Selon un exemple, le composant optique intégré est configuré de sorte que le trajet du faisceau lumineux entre le port de lumière interne et le miroir plan traverse la face supérieure du composant optique de base en périphérie du miroir convergent. La compacité du composant est ainsi améliorée.

Selon un exemple, le port de lumière externe est situé en périphérie du miroir plan. Cela améliore également la compacité du composant.

Selon un exemple, le port de lumière interne est un coupleur vertical configuré pour émettre ou recevoir le faisceau lumineux selon un axe optique présentant un angle θ compris entre 5° et 20°, typiquement 8°, vis-à-vis d'une direction normale aux deuxième et troisième faces. Par exemple, le coupleur vertical est réalisé grâce à un réseau de diffraction et forme un coupleur vertical à réseau de diffraction, également appelé « vertical grating coupler » en anglais. Le réseau de diffraction n'est pas forcément orthogonal à l'axe optique. Le réseau de diffraction peut être rectangulaire, ou avoir une forme sensiblement triangulaire, ou autre. Le faisceau de lumière issu du réseau ne présente pas nécessairement une section de même forme que celle du réseau. Le faisceau de lumière est sensiblement formé en optique gaussienne, c'est-à-dire qu'il présente, en section transverse, une distribution d'intensité gaussienne. L'axe optique change de direction lors des réflexions et/ou au passage des interfaces, par exemple au niveau de l'interface de sortie du composant.

Selon un exemple, le miroir convergent est choisi parmi un miroir à courbure sphérique ou parabolique, un miroir de Fresnel, ou un miroir diffractif. Selon un exemple, typiquement pour un miroir convergent diffractif, le miroir convergent est situé dans un plan intermédiaire entre le port de lumière interne et le miroir plan. Selon un exemple, le miroir convergent est situé dans un plan intermédiaire entre le port de lumière interne et la face supérieure. Ainsi, le port de lumière interne intercepte un premier plan normal à la direction z, la face supérieure s'étend le long d'un deuxième plan normal à la direction z, le port de lumière interne intercepte un troisième plan normal à la direction z, et le miroir convergent intercepte un plan intermédiaire normal à la direction z, situé entre les premier et troisième plans, de préférence entre les premier et deuxième plans.

Selon un exemple, le port de lumière interne est choisi parmi un réseau de diffraction, un miroir de renvoi associé à une extrémité d'un guide d'onde, un photodétecteur, un laser à cavité verticale (VCSEL). Cette liste n'est pas exhaustive et différents ports de lumière internes peuvent ainsi être envisagés. Ces ports de lumière internes peuvent être purement émissifs, tels que les VCSEL, ou purement réceptifs, tels que les photodétecteurs ou photodiodes, ou encore des ports de lumière internes bidirectionnels, fonctionnant en émission ou en réception.

Selon un exemple, le pavé transparent présente une hauteur h prise selon une direction normale à la troisième face, comprise entre 50 µm et 300 µm.

Selon un exemple, la taille de la deuxième surface du faisceau lumineux est au moins trois fois supérieure, et de préférence au moins cinq fois supérieure, à la taille de la première surface.

Selon un exemple, le composant optique intégré comprend une couche intercalaire polymère entre le pavé transparent et le composant optique de base. Cela permet par exemple de coller un pavé transparent rapporté sur le composant optique de base. Le pavé transparent peut ainsi être fabriqué séparément.

Selon un exemple, le pavé transparent et le composant optique de base sont à base de silice présentant un indice de réfraction n.

Selon un exemple, la couche intercalaire polymère est à base d'un polymère transparent présentant un indice de réfraction nₚ tel que 0,9.n ≤ nₚ ≤ 1,1.n. Cela permet d'éviter des réflexions parasites lorsque le faisceau lumineux traverse la couche intercalaire polymère. Selon un autre exemple, la couche intercalaire polymère est à base d'un polymère transparent présentant un indice de réfraction nₚ tel que 1,2 ≤ nₚ ≤ 1,7.

Selon un exemple, la couche intercalaire polymère remplit un espace entre le miroir convergent du composant optique de base et le pavé transparent. Cela permet par exemple d'accommoder une différence de forme entre le pavé transparent et le miroir convergent. La couche intercalaire polymère assure ainsi une continuité de matière entre le miroir convergent et le pavé transparent. Le pavé transparent peut présenter des faces planes et parallèles entre elles. Cela simplifie la conception du pavé transparent.

Selon un exemple, le pavé transparent est directement au contact du composant optique de base et du miroir convergent. Le pavé transparent peut être fabriqué directement sur le composant optique de base, par exemple par dépôt d'un polymère transparent laminé à chaud. Dans ce cas, le pavé transparent peut épouser la forme du miroir convergent.

Sauf incompatibilité, des caractéristiques techniques décrites en détail pour un mode de réalisation donné peuvent être combinées aux caractéristiques techniques décrites dans le contexte d'autres modes de réalisation décrits à titre exemplaire et non limitatif, de manière à former un autre mode de réalisation qui n'est pas nécessairement illustré ou décrit. Un tel mode de réalisation n'est évidemment pas exclu de l'invention.

Dans le cadre de la présente invention, l'expression « assurer la propagation d'un faisceau lumineux entre un premier port de lumière et un deuxième port de lumière » signifie que le faisceau peut être acheminé depuis le premier port de lumière jusqu'au deuxième port de lumière ou inversement que le faisceau peut être acheminé depuis le deuxième port de lumière jusqu'au premier port de lumière. Le faisceau lumineux se propage typiquement selon un trajet ou chemin optique.

Dans le cadre de la présente invention, un objet ou un matériau « transparent » signifie que l'objet ou le matériau laisse passer au moins 90% de l'intensité lumineuse du faisceau lumineux.

La couche transparente peut présenter des formes variées. Elle peut être qualifiée de pavé transparent sans que cette expression ne limite la forme que cette couche peut présenter. Ainsi le pavé transparent n'est pas nécessairement limité à une forme de parallélépipède rectangle. Il peut éventuellement s'apparenter à un cylindre, ou présenter des aspérités en creux ou en saillie par exemple.

Le terme « réflexion » ou ses équivalents se réfère au phénomène de réémission depuis une surface d'un faisceau lumineux incident, selon une ou plusieurs directions présentant des sens opposés à la direction incidente. Dans la présente description, une surface est considérée comme réfléchissante dès lors qu'elle réémet au moins 85% de l'intensité d'un faisceau lumineux incident. La réflexion peut être spéculaire (une direction de réflexion), ou diffuse (plusieurs directions de réflexion).

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un élément, une couche, « à base » d'un matériau A, un substrat, un élément, une couche comprenant ce matériau A uniquement ou ce matériau A et éventuellement d'autres matériaux, par exemple des éléments d'alliage et/ou des éléments dopants.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, la hauteur et la profondeur sont prises selon z. Le faisceau se propage le long de l'axe optique et sa forme évolue le long de sa propagation. Dans un plan transverse à l'axe optique, la forme et la dimension du faisceau sont évaluées en considérant le contour du faisceau dans ce plan. Le contour du faisceau dans un plan transverse à l'axe optique est défini comme le lieu des points de ce plan où l'intensité est réduite d'un facteur 1/e² par rapport au centre du faisceau sur l'axe optique, e étant la constante d'Euler valant approximativement 2,71828. Ainsi, la forme du faisceau peut être par exemple circulaire et définie par un diamètre, ou par exemple elliptique et définie par un grand diamètre et un petit diamètre. Dans le cas général, la taille du faisceau dans un plan transverse donné sera comprise comme la dimension linéaire maximale entre deux points quelconques du contour du faisceau dans ce plan. Pour un plan transverse donné, la « section » ou la « surface » du faisceau sont définis comme la surface du plan transverse située à l'intérieur du contour du faisceau. La « taille » de cette section ou surface est définie comme la taille du faisceau dans le plan transverse considéré.

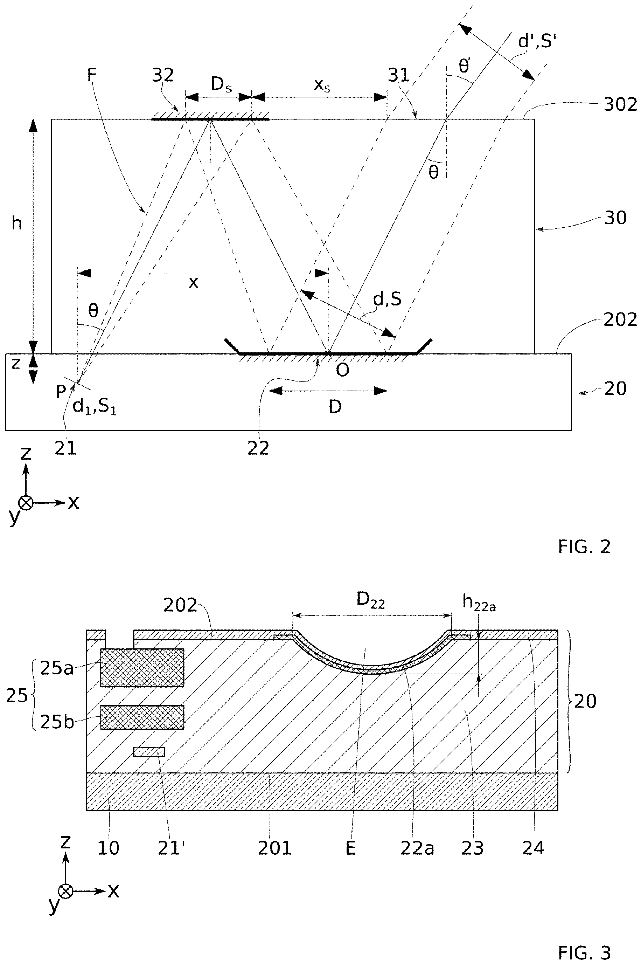

Selon une possibilité, la taille du faisceau ou la dimension caractéristique du faisceau est mesurée, au niveau du port de lumière interne, dans un plan orthogonal à l'axe optique, par exemple la taille d₁ de la surface S₁ sur la figure 2. La réfraction du faisceau au niveau du port de lumière externe engendre typiquement un changement de direction de l'axe optique, à l'interface entre la couche transparente et le milieu extérieur. Cette interface est appelée « troisième surface ». Il existe donc plusieurs possibilités pour mesurer la taille du faisceau au niveau du port de lumière externe. La taille du faisceau ou la dimension caractéristique du faisceau peut être mesurée, au niveau du port de lumière externe, dans un plan orthogonal à l'axe optique en dehors du composant optique intégré, par exemple la taille d' de la surface S' sur la figure 2, ou dans un plan orthogonal à l'axe optique au sein de la couche transparente du composant optique intégré, par exemple la taille d de la surface S sur la figure 2. Selon une autre possibilité, la taille du faisceau ou la dimension caractéristique du faisceau est mesurée, au niveau du port de lumière externe, dans le plan de la troisième surface. Ainsi, une section ou une surface « transverse » ne signifie pas nécessairement que cette section ou surface est orthogonale à l'axe optique.

Les termes relatifs tels que « sur », « surmonte », « sous », « sous-jacent », « au-dessus », « en-dessous » se réfèrent à des positions prises selon la direction z. Cette liste de termes n'est pas exhaustive. D'autres termes relatifs pourront être facilement précisés au besoin, en se référant aux dessins d'accompagnement.

On entend par un élément situé « au niveau de » un autre élément, un positionnement de cet élément sur ou à proximité immédiate de cet autre élément. Typiquement un miroir plan situé au niveau de la troisième face signifie que le miroir plan est directement sur cette troisième face ou légèrement décalé par rapport à cette troisième face, par exemple en étant encapsulé dans la couche transparente sous la troisième face, à une profondeur maximale de 20% de l'épaisseur de ladite couche transparente. « Au niveau de » indique qu'une tolérance en positionnement est permise. Cette tolérance est de l'ordre de 20% vis-à-vis des positions idéales illustrées sur les dessins.

Les termes « vertical », « verticalement » se réfèrent à une direction selon z. Les termes « horizontal », « horizontalement » se réfèrent à une direction dans le plan xy. Le terme « latéral », lorsqu'il s'agit d'un déplacement ou d'un positionnement, se réfère également à une direction dans le plan xy.

Un élément situé « à l'aplomb » ou « au droit d'» un autre élément signifie que ces deux éléments sont situés tous deux sur une même ligne orientée verticalement sur les figures.

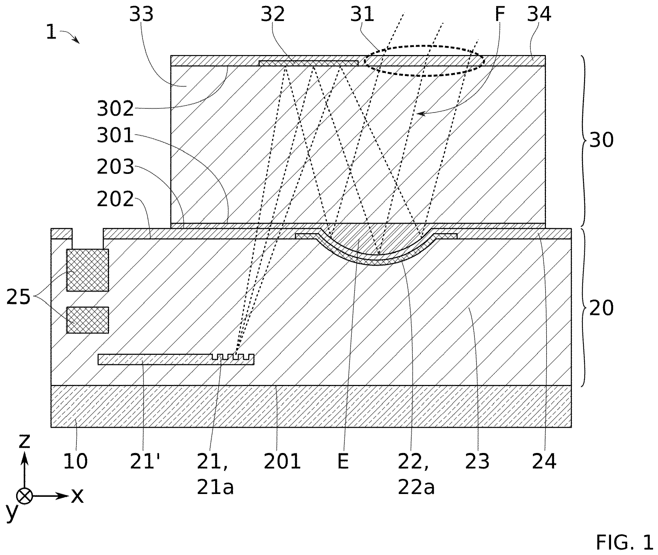

Différents modes de réalisation du composant optique intégré sont décrits dans la suite et illustrés aux figures 1 à 9. Le principe de ce composant optique est de modifier la taille d'un faisceau lumineux, entre un port de lumière interne - où une dimension caractéristique du faisceau est réduite - et un port de lumière externe - où la dimension caractéristique du faisceau est élargie. La dimension caractéristique élargie est de préférence supérieure à trois fois la dimension caractéristique réduite, et de préférence supérieure à cinq fois. La dimension caractéristique du faisceau peut-être typiquement un diamètre, ou un grand axe ou encore un petit axe d'une ellipse. Dans la suite, par souci de clarté, on parlera simplement de diamètre pour désigner cette dimension caractéristique. Le faisceau lumineux présente typiquement une longueur d'onde λ de l'ordre de 1,3 µm ou 1,5 µm.

Un premier exemple de composant optique intégré 1 selon l'invention est illustré à la figure 1.

Le composant optique intégré 1 comprend un composant optique de base 20 porté par un substrat 10. Le composant optique de base 20 comprend un port de lumière interne 21. Il présente une face inférieure 201 et une face supérieure 202.

Ce composant optique de base 20 peut typiquement être une puce ou un composant photonique sur silicium formé à partir d'un substrat de type silicium sur isolant SOI (acronyme de « Silicon On Insulator »). Un tel substrat SOI comprend typiquement en empilement selon z une couche mince de silicium dite topSi, par exemple d'épaisseur 300 nm, sur une couche d'oxyde enterrée dite BOX (acronyme de « Burried OXide »), par exemple d'épaisseur 800 nm, sur un substrat massif de silicium dit « bulk ». Le silicium bulk forme ici le substrat 10 de support du composant optique de base 20. L'interface entre le BOX et le bulk correspond à la face inférieure 201 du composant optique de base 20.

La couche topSi est typiquement structurée de façon à former des éléments photoniques, par exemple un ou des guides d'onde 21'. Le composant optique de base 20 peut comprendre des fonctions variées comme des modulateurs électro-optiques de lumière, des photodiodes par exemple en germanium sur silicium, des fonctions de filtrage ou de routage, et des conducteurs électriques métalliques 25 pour piloter les différents éléments photoniques.

L'ensemble des éléments photoniques et électriques est typiquement encapsulé dans une couche d'encapsulation 23 à base d'un matériau diélectrique isolant et transparent comme la silice. Dans la suite, on considérera que la couche d'encapsulation 23 est en silice et présente un indice de réfraction n = 1,45.

Selon une possibilité non illustrée, d'autres types de composants optiques de base 20 sont également envisageables, par exemple des circuits fabriqués à partir de matériaux III-V ou II-VI.

Dans l'exemple illustré à la figure 1, la couche topSi est structurée en bout de guide d'onde 21' pour former un réseau de diffraction 21a. Ce réseau de diffraction 21a forme ici le port de lumière interne 21. Il est orienté vers le haut, c'est-à-dire qu'il est configuré en coupleur vertical pour émettre ou recevoir un faisceau lumineux F au travers de la face supérieure 202. Le réseau de diffraction 21a peut être vu comme un port de sortie ou comme un port d'entrée selon la direction de la lumière. Il forme ici un port de lumière interne 21 bidirectionnel.

Le long de l'axe optique du faisceau lumineux F, la forme et la taille du faisceau évoluent. Dans la suite de la description on considérera que la forme du faisceau est circulaire, ou elliptique avec un plan de symétrie xz. Dans le cas d'un faisceau elliptique, le mot « diamètre » désignera le diamètre de l'ellipse qui se trouve dans le plan de symétrie xz.

Le faisceau lumineux F présente typiquement une première section de taille réduite au niveau du port de lumière interne 21, notée S₁. Cette section, si elle est circulaire ou elliptique, présente typiquement un diamètre d₁ dans le plan xz, référencé en figure 2. Ce diamètre d₁ réduit est au niveau du port de lumière interne 21. Ce diamètre réduit d₁ est par exemple de l'ordre de 9 µm. Comme illustré à la figure 1, le faisceau lumineux F est typiquement orienté vers le haut avec un angle θ de l'ordre de 8° par rapport à la verticale.

Le composant optique de base 20 comporte également un miroir convergent 22 au niveau de sa face supérieure 202, orienté vers le haut, et de diamètre supérieur ou égal à la largeur D du faisceau à ce niveau, la largeur du faisceau étant mesurée selon la direction horizontale x. La largeur D est référencée en figure 2.

Le composant optique intégré 1 comprend également une couche transparente 30, également désignée pavé transparent 30, placée à la surface du composant optique de base 20. Ce pavé transparent 30 peut présenter des formes variées, par exemple une forme de parallélépipède rectangle, sans que cette forme particulière soit limitative. Ce pavé transparent 30 est positionné au-dessus du port de lumière interne 21 et du miroir convergent 22. Il présente sur sa face supérieure 302 une zone plane réfléchissante ou miroir plan 32. Le pavé transparent 30 peut typiquement présenter des faces 301, 302 planes et parallèles au plan xy. Le miroir plan 32 permet de réfléchir le faisceau de lumière F au sein du pavé transparent 30 pour établir un trajet lumineux entre le port de lumière interne 21 et le miroir convergent 22. Ainsi, un faisceau lumineux émis par le port de lumière interne 21 se propage vers le haut dans le composant optique de base 20, puis dans le pavé transparent 30, tout en s'épanouissant. Le faisceau lumineux F est ensuite réfléchi par le miroir plan 32 en direction du miroir convergent 22. Le faisceau lumineux F fait de cette manière un aller-retour dans le pavé transparent 30 tout en s'épanouissant, avant d'être collimaté par le miroir convergent 22. Le faisceau lumineux F collimaté se dirige ensuite vers le haut en direction du port de lumière externe 31. Il sort alors du composant optique intégré 1.

L'épaisseur h du pavé 30 est choisie pour offrir une longueur de parcours suffisante pour que le faisceau lumineux F s'épanouisse lors de son trajet jusqu'à atteindre un diamètre d après réflexion sur le miroir convergent 22. Plus d est grand, meilleure est la tolérance au désalignement. L'épaisseur h et la distance focale du miroir convergent peuvent être notamment choisies ou déterminées en fonction l'une de l'autre.

Comme illustré à la figure 2, on notera de manière générale P le point situé au centre du col du faisceau de lumière couplé au port de lumière interne 21, d₁ le diamètre du faisceau au niveau de ce col. L'angle d'émission θ est pris entre le rayon central du faisceau lumineux appelé axe optique et la verticale selon z. La section du faisceau entre le miroir convergent 22 et le port de lumière externe 31 est noté S. Cette section, si elle est circulaire ou elliptique présente typiquement un diamètre noté d. En sortant du port de lumière externe 31 le faisceau lumineux peut présenter un angle θ' différent de l'angle θ, et une section S' ou un diamètre d'. Ceci est typiquement dû à un phénomène de réfraction de la lumière au niveau de la face 302. Le faisceau lumineux F présente ainsi une deuxième section de taille élargie au niveau du port de lumière externe 31. Cette deuxième section peut présenter la surface S, à l'intérieur du composant optique intégré, ou la surface S' en dehors du composant optique intégré.

La section élargie du faisceau lumineux F présente ainsi une deuxième surface S ou S' de taille strictement supérieure, de préférence au moins trois fois supérieure, et plus préférentiellement au moins cinq fois supérieure, à la taille de la première surface S₁ prise au niveau du port interne 21.

On rappelle que la loi de l'optique communément appelée « loi du retour inverse de la lumière » indique qu'un trajet de lumière parcouru dans un sens peut tout aussi bien être parcouru dans le sens inverse, ce qui fait que les raisonnements explicités dans le cas d'un port de lumière « de sortie », c'est-à-dire émettant le faisceau lumineux, peuvent se réécrire dans le cas d'un port de lumière « d'entrée », c'est-à-dire recevant le faisceau lumineux, en inversant le sens du parcours de la lumière. Ainsi, assurer la propagation d'un faisceau lumineux entre un premier port de lumière et un deuxième port de lumière signifie que le faisceau peut se propager depuis le premier port de lumière jusqu'au deuxième port de lumière, ou inversement que le faisceau peut se propager depuis le deuxième port de lumière jusqu'au premier port.

La figure 3 illustre plus en détail un mode de réalisation du composant optique de base 20. Dans cet exemple, un miroir convergent 22a courbe de centre O et de distance focale f, est fabriqué au niveau de la face supérieure 202 du composant 20. Ce miroir convergent 22a présente un diamètre suffisant pour réfléchir un faisceau de diamètre d. Le diamètre du miroir D22 est par exemple compris entre 30 et 100 microns, typiquement de l'ordre de 70 µm. Le miroir convergent 22a peut présenter une hauteur h22a comprise entre 0,5 et 3 microns, par exemple de l'ordre de 1,2 microns.

Un tel miroir courbe peut être réalisé grâce à une photolithographie à niveaux de gris. Le motif obtenu par cette photolithographie à niveaux de gris est ensuite transféré par gravure dans la couche d'encapsulation 23 en silice. Un dépôt d'une couche réflectrice, par exemple une couche d'aluminium ou d'AISi d'épaisseur 200 nm environ, est effectué au niveau du motif transféré. Un miroir courbe 22a est ainsi obtenu. De façon préférée mais optionnelle, une couche de protection 24 transparente (par exemple une couche de nitrure de silicium) est formée sur le miroir 22a et sur la face supérieure 202 du composant optique de base 20. Avantageusement, l'épaisseur de la couche de protection 24 à base de nitrure de silicium peut être choisie de façon à former une couche antireflet.

Selon une autre possibilité, la couche d'encapsulation 23 est à base d'un matériau polymère et le miroir courbe 22a est fabriqué par gaufrage du matériau polymère à l'aide d'un moule (« nano-imprint lithography » en anglais). La surface courbe ainsi obtenue est ensuite recouverte d'une couche réfléchissante, par exemple par dépôt d'aluminium.

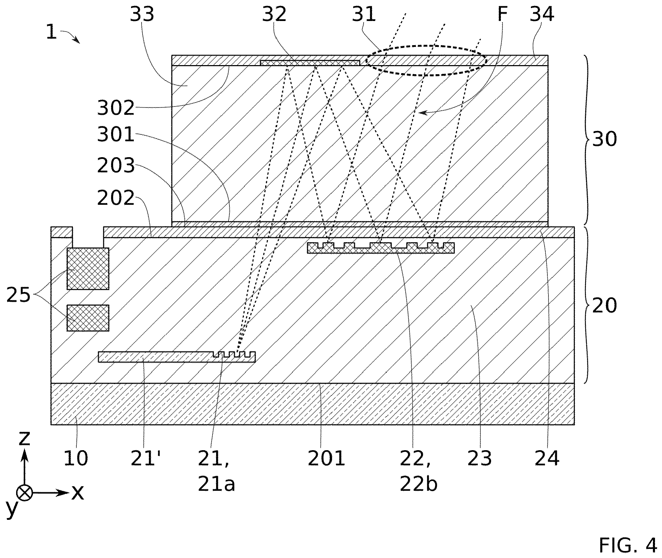

D'autres types de miroir convergent sont envisageables. La figure 4 illustre par exemple un miroir convergent 22b de type miroir de Fresnel ou miroir diffractif. Un tel miroir diffractif peut être binaire ou encore multi-niveaux. Il est typiquement défini avec une finesse pouvant être inférieure à la longueur d'onde de la lumière (« sub-wavelength diffractive mirror » en anglais).

Le miroir convergent 22 est orienté vers le haut, c'est-à-dire qu'il est réfléchissant et convergent pour des faisceaux lumineux venant du haut vers le bas. L'axe du miroir en son centre O est typiquement vertical, mais le miroir peut aussi être conçu de sorte que son axe soit incliné, pour modifier l'orientation du faisceau après la réflexion.

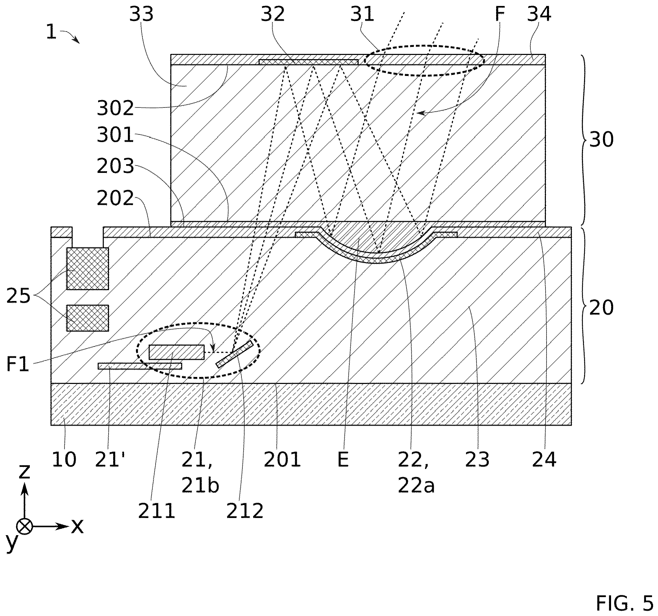

La figure 5 illustre un autre mode de réalisation du composant optique intégré 1 dans lequel le port de lumière interne 21 est de type « coupleur par la tranche ». Dans cet exemple, le guide d'onde 21' est couplé à un convertisseur de mode 211 associé à un miroir de renvoi 212. Le port de lumière interne 21 est donc ici un port de lumière composite composé du convertisseur de mode 211 et du miroir de renvoi 212.

La taille du mode optique guidé par des guides d'onde 21' en silicium étant en général inférieure au micron, il est avantageux d'utiliser un convertisseur de mode 211, par exemple en nitrure de silicium, pour produire un faisceau F1 de diamètre plus large, par exemple d₁ = 6 µm. Ce faisceau F1 est ensuite renvoyé par le miroir 212 selon un angle θ en direction du miroir plan 32. Comme dans le cas du réseau de couplage 21a illustré à la figure 1, le port de lumière 21b est un port bidirectionnel. Dans le cadre de la présente invention, le détail de la composition et de la fabrication de ce port composite ne sera pas abordé et il sera considéré comme une entité caractérisée uniquement par les deux paramètres θ et d₁ mentionnés plus haut.

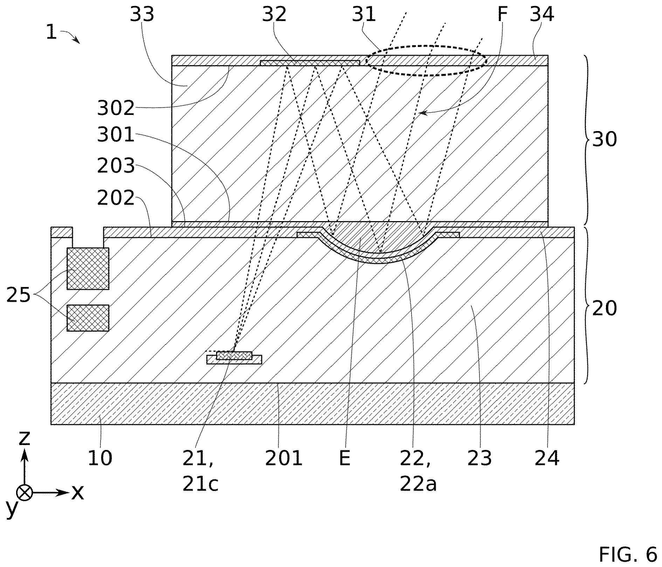

Selon un autre mode de réalisation illustrée à la figure 6, le port de lumière interne 21 peut également être un photorécepteur 21c comme une photodiode en germanium. Une telle photodiode peut être fabriquée par exemple dans une cavité en silicium, avec un diamètre d₁ = 9 µm par exemple. Ce port de lumière interne 21, 21c est alors uniquement un port d'entrée de lumière. D'autres types de ports de lumière internes 21 peuvent être envisagés, comme un laser à cavité verticale (VCSEL), qui sera alors un port de sortie de lumière.

Dans le composant optique intégré 1, un pavé transparent 30 est associé au composant optique de base 20. Ce pavé transparent 30 comprend le miroir plan 32 et le port de lumière externe 31 au niveau de sa face 302. Un tel pavé transparent 30 peut être fabriqué de plusieurs façons.

Dans un premier mode de réalisation, ce pavé transparent 30 est fabriqué séparément du composant optique de base 20. Le pavé transparent 30 est ici typiquement fabriqué à partir d'un substrat 33 en silice sur lequel on aura préparé par photolithographie un miroir plan 32, par exemple sous forme d'une couche à base d'aluminium. Pour protéger ce miroir plan 32, une couche d'encapsulation 34 transparente, par exemple à base de nitrure de silicium, est de préférence formée sur le miroir 32 et sur la face 302 du pavé transparent 30. Avantageusement, l'épaisseur de couche d'encapsulation 34 à base de nitrure de silicium peut être choisie de façon à former une couche antireflet.

Le pavé transparent 30 peut ensuite être collé sur le composant optique de base 20, au-dessus du port de lumière interne 21 et du miroir convergent 22, comme illustré sur les différentes figures 1 à 9. Le miroir plan 32 du pavé transparent 30 doit être positionné de manière à réfléchir la lumière issue du port de lumière interne 21 du composant de base 20 sans obstruer la lumière réfléchie ensuite par le miroir convergent 22. Du fait de la planéité du miroir plan 32 et des faces 301, 302 du pavé transparent 30, la précision du positionnement n'est pas critique. Une translation horizontale de quelques microns, voire de quelques dizaines de microns, est ainsi tolérée. On peut donc utiliser pour réaliser cette opération de report du pavé transparent 30 sur le composant optique de base 20 des machines de placement présentant une précision limitée et une forte cadence. Cela est avantageux dans un contexte de production industrielle des composants optiques intégrés 1.

Le collage peut être réalisé à l'aide d'une couche adhésive 203 à base de polymère transparent, également appelée couche intercalaire polymère. Cela permet avantageusement de remplir la cavité ou l'espace E présent au-dessus du miroir convergent 22, typiquement dans le cas d'un miroir courbe 22a. On préférera choisir une couche adhésive 203 présentant un indice de réfraction apte à limiter les réflexions parasites entre le composant optique de base 20 et le pavé transparent 30. Dans le cas où la couche d'encapsulation 23 du composant optique de base 20 est en silice et le substrat 33 du pavé transparent 30 est également en silice, on choisira typiquement une couche adhésive 203 avec un indice de réfraction proche de celui de la silice. On pourra en particulier utiliser une couche adhésive 203 polymérisant sous insolation ultra-violette, pour figer la position du pavé transparent 30 lors de sa mise en place. Il peut en outre être avantageux d'utiliser une couche adhésive 203 de type « dual-cure », qui permet de figer le pavé transparent 30 rapidement par une première insolation ultra-violette courte, puis de procéder ultérieurement à un recuit thermique global pour terminer la polymérisation de la couche adhésive 203, par exemple lorsque tous les pavés transparents 30 sont placés sur les composants optiques de base 20, dans le cadre d'un report collectif des uns sur les autres.

Pour définir avec précision la distance h séparant le miroir 32 de la face supérieure 202 du composant 20 lors du collage, il est possible d'utiliser des espaceurs (non illustré), par exemple des plots fabriqués sur la face inférieure 301 du pavé transparent 30, ou des cales d'épaisseur calibrées, ou bien encore des billes calibrées dispersées dans la couche adhésive 203.

On peut envisager d'autres moyens de collage du pavé transparent 30, par exemple un collage direct (aussi appelé « collage moléculaire ») dans le cas où la face supérieure 202 du composant 20 est plane et présente une planéité et une rugosité compatibles avec un collage direct.

Avantageusement, les pavés transparents 30 sont mis en place de manière collective sur des wafers de composants optiques de base 20, afin de bénéficier de l'efficacité d'un procédé de report collectif. Après report des pavés transparents 30, les wafers sont typiquement découpés en fin de fabrication pour produire des composants optiques intégrés 1 individuels.

Dans un autre mode de réalisation, le pavé transparent 30 est formé directement sur le composant optique de base 20 par dépôt d'un matériau polymère transparent. Le pavé transparent 30 peut dans ce cas être par exemple formé à partir d'un film polymère laminé à chaud sur le composant optique de base 20, sur lequel est ensuite formé par photolithographie le miroir plan 32. Une couche de protection par exemple à base de vernis polymère transparent peut ensuite être appliquée sur le film polymère et le miroir plan 32.

Dans la suite, des exemples de dimensionnement et de tolérancement sont détaillés. La modélisation et les notations utilisées pour les calculs sont illustrées à la figure 2. Les calculs sont ici effectués pour une longueur d'onde λ = 1,310 µm (dans le vide). Ces calculs peuvent être transposés à toute autre longueur d'onde. On se placera, pour simplifier, dans la situation où les matériaux traversés ont tous l'indice de réfraction de la silice, n = 1,447. On considère un miroir convergent 22 de centre O présentant un axe vertical. Le port de lumière interne 21 est en général à une distance z en dessous de l'altitude du centre O du miroir 22, typiquement de quelques microns, par exemple z = 4 µm. Le cas moins courant où le port de lumière interne 21 est à une altitude supérieure à celle du centre du miroir 22 correspondra à une valeur d'altitude z négative. Toutefois, cette valeur de z est petite devant l'épaisseur h du pavé transparent 30, et elle pourra en général être négligée dans les calculs.

Le faisceau lumineux F est considéré comme un faisceau monomode gaussien, ce qui est une bonne approximation de la réalité. La divergence du faisceau gaussien est Δθ ≃ 4 λ / (π n d₁). Pour obtenir un faisceau de diamètre d'après réflexion sur le miroir convergent 22, il faut le laisser s'épanouir sur une longueur L = d / Δθ. L'épaisseur de pavé transparent nécessaire est donc h = L/2 cos(θ). Pour produire un faisceau F collimaté, la distance focale f du miroir convergent 22 est de préférence égale à L. Cette situation est typiquement recherchée pour le composant optique intégré 1.

Dans une première approximation, le miroir 22 peut être sphérique, de rayon de courbure R = 2 f. Toutefois, pour tenir compte de l'incidence oblique d'angle θ, on pourra considérer une surface ellipsoïdale de rayons R1 = 2 f / cos(θ) dans le plan d'incidence (plan xz sur la figure 2) et R2 = 2 f cos(θ) dans le plan sagittal (perpendiculaire au plan d'incidence). De manière générale, l'homme de l'art déterminera la surface idéale en utilisant un logiciel de conception optique, par exemple Zemax, Oslo ou CODE V. La surface du miroir 22 est d'une taille supérieure à celle du port interne de lumière.

Le faisceau lumineux F sort du pavé transparent 30 par le port de lumière externe 31 pour se propager dans un milieu d'indice de réfraction n', avec un diamètre d' et selon une direction d'angle θ'. On considérera le cas typique où la sortie du faisceau lumineux F se fait dans l'air, c'est-à-dire avec n' = 1.

On peut écrire la relation de réfraction n sin(θ) = n' sin(θ'), qui donne l'angle de sortie θ' = arcsin(n sin(θ) / n') en fonction de θ. On peut également écrire la relation géométrique d/cos(θ) = d'/cos(θ'), qui donne le diamètre du faisceau au niveau du miroir convergent 22 : d = d' cos(θ)/cos(θ') en fonction de d'.

Le diamètre horizontal D du faisceau au niveau du miroir convergent 22 est D = d / cos(θ). Le miroir convergent 22 devra avoir un diamètre supérieur ou égal à D.

Au niveau du miroir plan 32 sur la face supérieure 302 du pavé transparent 30, le diamètre horizontal du faisceau est Dₛ = L/2 · Δθ/cos(θ). Le miroir plan 32 devra avoir un diamètre supérieur ou égal à Dₛ. Pour que cette géométrie soit réalisée en pratique, il faut déterminer la marge xₛ entre le bord du faisceau au niveau du miroir plan 32 et le bord du faisceau émergeant au niveau du port de lumière externe 31, après réflexion sur le miroir convergent 22. Cela permet de vérifier que le bord du miroir plan 32 ne risque pas de cacher une partie du faisceau sortant. La marge xₛ peut être calculée selon : xₛ = L sin(θ) - (D + Dₛ)/2.

Un autre enjeu de cette modélisation concerne la tolérance du système optique aux variations de géométrie. En particulier il est possible de déterminer la sensibilité du couplage entre les ports de lumière interne et externe 21, 31 en fonction d'une variation de la hauteur h du pavé transparent 30, ou de manière équivalente, en fonction d'une variation de l'épaisseur de la couche adhésive polymère 203 sous le pavé transparent 30. La distance x entre le port de lumière interne 21 et le centre O du miroir convergent 22 varie selon dx/dh = 2 tan(θ). La variation de la position x₁ du faisceau dans le plan du port interne de lumière est liée à la variation de x par δx₁ = δx · cos(θ). On a ainsi dx₁/dh = dx/dh cos(θ) = 2 sin(θ). La variation d'épaisseur δh qui produit un décalage δx₁ est donc δh = δx₁ / (2 sin(θ)). En fonction du décalage δx₁ par rapport au centre du port de lumière 21, la transmission dans le port de lumière 21, supposé gaussien, est T = exp(-4 (δx₁/d₁)²). La transmission T vaut par exemple T = 85% pour un décalage δx₁ = d₁/5. On appellera δh(85%) la variation de hauteur correspondant à cette situation. Cette variation de hauteur vaut δh(85%) = (d₁/5) / (2 sin(θ)) = d₁ / (10 sin(θ)).

En complément, les tolérances angulaires et spatiales sont indiquées pour un faisceau sortant dans un milieu d'indice de réfraction n' = 1. La largeur angulaire du faisceau de sortie est Δθ' ≃ 4 λ / (π n' d'). Pour un décalage angulaire δθ' du faisceau, la transmission dans le port de lumière externe 31 évolue selon T = exp(-4 (δθ'/Δθ')²) et vaut par exemple T = 85% pour δθ' = Δθ'/5, valeur que l'on notera δθ'(85%). Pour un décalage δx' du faisceau incident par rapport à sa position idéale, la transmission dans le port de lumière externe évolue selon T = exp(-4 (δx'/d')²). On appellera δx'(85%) la valeur du décalage correspondant à une transmission réduite à T = 85%.

Le tableau 1 [Table1] suivant présente les calculs effectués dans trois configurations pour un diamètre de mode sortant d' de 50 µm. Les trois colonnes de gauche sont les paramètres d'entrée à partir desquels sont déduits les autres paramètres.

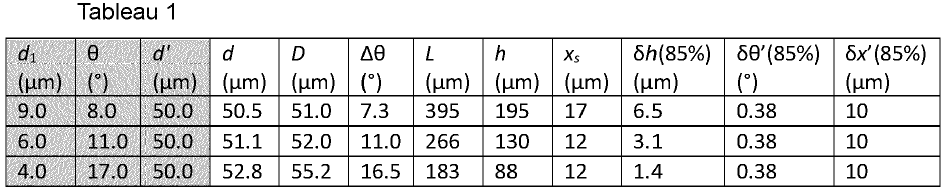

Le tableau 2 présente les calculs effectués dans trois configurations pour un diamètre de mode sortant d' de 70 µm.

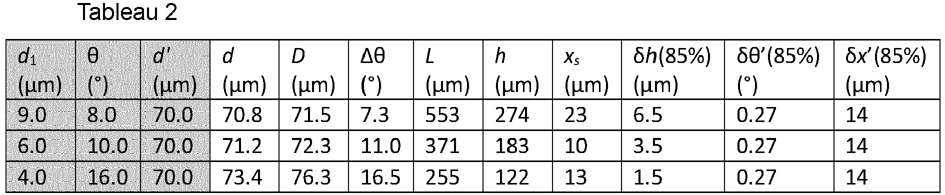

Dans toutes les configurations présentées, la marge xₛ est supérieure à 10 µm, ce qui laisse une tolérance confortable pour la position du bord du miroir plan 32. Dans le cas où le pavé transparent 30 est assemblé au composant optique de base 20 par report, ce report peut donc être effectué en utilisant un équipement de placement de puces (équipement de « pick-and-place » en anglais) offrant une précision de ± 10 µm, ce qui est courant pour les équipements industriels. Cette tolérance de placement est confortable et avantageuse en comparaison des solutions connues qui nécessitent un placement plus délicat (typiquement ± 2 µm). En outre, la tolérance au désalignement entre le composant optique intégré selon l'invention et un connecteur optique augmente avec l'élargissement du faisceau.

La tolérance en épaisseur δh(85%) du pavé transparent 30 varie de 1,4 à 6,5 µm selon les configurations. Lors de la fabrication des pavés transparents, l'épaisseur des substrats 33 peut être maîtrisée à ± 1 µm ou mieux en utilisant des procédés de polissage et de mesure adaptés. Le collage peut aussi être optimisé avec la même précision en utilisant des espaceurs. Les configurations décrites ici peuvent donc être réalisées en pratique. De façon préférée, on optera pour un port de lumière interne 21 de diamètre d₁ le plus large possible, par exemple 6 ou 9 µm car c'est cette situation qui offre la plus large tolérance pour l'épaisseur h.

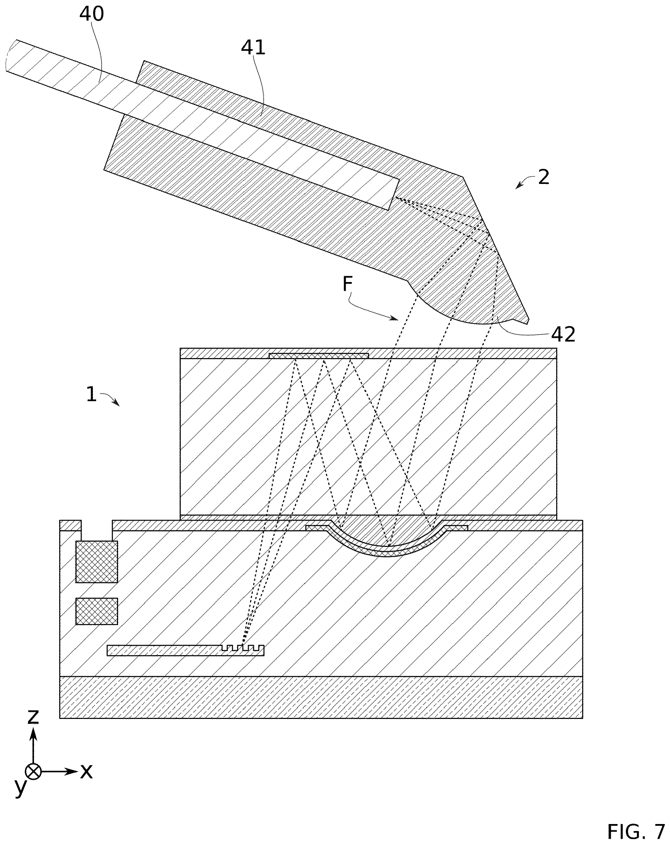

Comme illustré aux figures 7, 8 et 9, le composant optique intégré 1 comprenant un pavé transparent 30 selon la présente invention peut être utilisé avec un connecteur optique fibré 2 configuré pour être couplé à un faisceau élargi.

Un tel connecteur 2 comprend typiquement une ou des microlentilles 42 au bout des fibres optiques 40. Ce type de connecteur est notamment commercialisé chez Senko. Le connecteur 2 peut également comprendre un manchon ou ferrule 41 qui dévie la lumière des fibres optiques 40 à l'aide d'un miroir de renvoi et d'une microlentille, ou d'un miroir de renvoi courbe. Cela permet de modifier la direction du faisceau, de l'élargir et de le collimater. Ce type de connecteur est notamment commercialisé chez USConec.

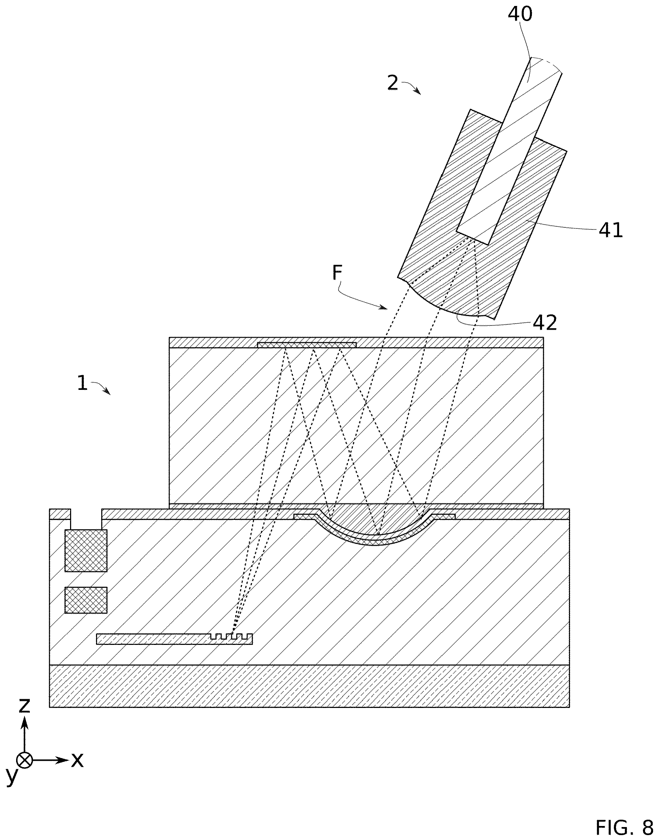

Selon la géométrie du connecteur optique 2 envisagé, son orientation par rapport au composant optique intégré 1 devra être adaptée pour que les axes optiques soient bien alignés. Les figures 7 et 8 présentent deux possibilités de positionnement et d'alignement relatif du connecteur 2 vis-à-vis du composant optique intégré 1.

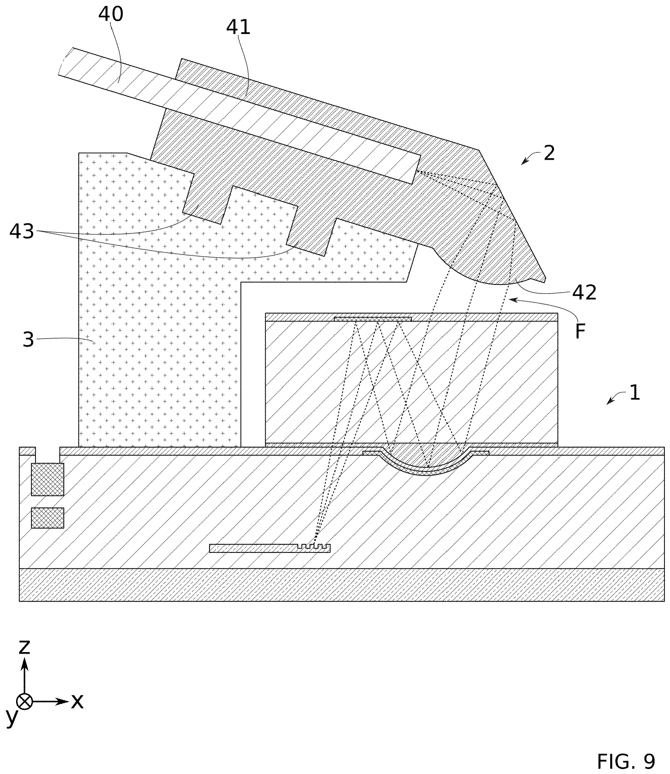

Comme illustré à la figure 9, une embase mécanique 3 peut également être prévue pour assurer un positionnement reproductible selon les tolérances énoncées plus haut. En particulier, la tolérance latérale δx'(85%) de 10 µm ou plus permet d'envisager un simple emboitement mécanique du connecteur optique 2 sur l'embase mécanique 3 pour assurer cette précision d'alignement. C'est une tolérance relâchée en comparaison à la précision de ± 2 µm typiquement nécessaire pour la connexion de fibres optiques nues directement collées au-dessus d'un port de lumière interne d'un composant optique intégré classique. Cette embase mécanique 3 peut ainsi coopérer avec le connecteur 2 via de simples ergots 43.

Le composant optique intégré 1 selon la présente invention permet d'utiliser une grande variété de connecteurs optiques. Le pavé transparent et le miroir convergent peuvent notamment être dimensionnés avec les formules énoncées plus haut pour produire un faisceau élargi sortant du composant optique intégré avec un diamètre d'égal au diamètre de mode nominal du connecteur optique 2 envisagé. La distance focale du miroir convergent 22 utilisé dans le composant optique de base 20 ainsi que le diamètre d₁ du port de lumière interne 21 ne sont pas contraints par le choix du connecteur 2, contrairement aux solutions connues de l'état de la technique.

En outre, dans la présente invention, le faisceau ne passe pas par le substrat 10 et il n'y a donc pas de réflexions parasites gênantes. L'utilisation de matériaux transparents comme la silice et la mise en place de couches antireflets sur des faces 202, 302 facilement accessibles permet de proposer une solution limitant significativement les pertes optiques. En outre, comme l'élargissement du faisceau ne dépend pas du substrat 10, l'épaisseur du substrat 10 ne sera pas contrainte par le choix du diamètre d, d' de mode souhaité. Cette épaisseur de substrat 10 pourra ainsi être choisie indépendamment pour accommoder d'autres contraintes (par exemple pour assurer une dissipation thermique optimale, ou pour permettre l'utilisation de vias traversants TSV). Cela permet d'envisager une plus grande versatilité de conception du composant optique intégré 1.

Il ressort clairement de la description qui précède que le composant optique intégré 1 selon l'invention présente de faibles pertes optiques, permet un assemblage facilité (un placement du pavé transparent avec une précision de la dizaine de microns suffit), et peut être associé à différents connecteurs du commerce (sans être lié à un connecteur spécifique au cours de la conception).

L'invention n'est pas limitée aux modes de réalisations précédemment décrits.

## Revendications

1. Composant optique intégré (1) configuré pour assurer une propagation d'un faisceau lumineux (F) entre un premier port de lumière (21) dit interne et un deuxième port de lumière (31) dit externe, le faisceau lumineux (F) présentant un axe optique, une première surface (S₁) prise transversalement à l'axe optique du faisceau (F) pris au niveau du premier port de lumière (21), et une deuxième surface (S') prise transversalement à l'axe optique du faisceau (F) pris au niveau du deuxième port de lumière (31), telles que la deuxième surface (S') est de taille strictement supérieure, et de préférence au moins trois fois supérieure, à la première surface (S₁), ledit composant optique intégré (1) comprenant un composant optique de base (20) comprenant ledit port de lumière interne (21, 21a, 21b, 21c),
le composant optique de base (20) présentant une première face (201) dite face inférieure, et une deuxième face (202) dite face supérieure, opposée à la face inférieure (201),
le port de lumière interne (21) étant configuré pour émettre ou recevoir le faisceau lumineux (F) respectivement de façon divergente ou convergente, selon un trajet passant au travers de la face supérieure (202) du composant optique de base (20),
le composant optique intégré (1) comprend en outre une couche transparente (30) disposée sur la face supérieure (202) du composant optique de base (20), ladite couche transparente (30) présentant une troisième face (302) en regard de et parallèle à la face supérieure (202) du composant optique de base (20), ladite couche transparente (30) comprenant le port de lumière externe (31) au niveau de ladite troisième face (302), et en ce que
la couche transparente (30) comprend un miroir plan (32) situé au niveau de la troisième face (302) et tourné en regard de la face supérieure (202) du composant optique de base (20), et le composant optique de base (20) comprend un miroir convergent (22, 22a, 22b) tourné en regard de la troisième face (302) de la couche transparente (30),
lesdits miroirs plan (32) et convergent (22) étant agencés de sorte que le faisceau lumineux (F) se propage entre le port de lumière interne (21) et le port de lumière externe (31) en traversant la couche transparente (30) par réflexion sur le miroir plan (32) et par réflexion sur le miroir convergent (22).

2. Composant selon la revendication précédente dans lequel le miroir plan (32) est interposé sur le trajet du faisceau lumineux (F) entre le port de lumière interne (21) et le miroir convergent (22), et dans lequel le miroir convergent (22) est interposé sur le trajet du faisceau lumineux entre le port de lumière externe (31) et le miroir plan (32).

3. Composant selon l'une quelconque des revendications précédentes dans lequel le port de lumière interne (21) est configuré pour que le faisceau lumineux (F) présente des rayons lumineux non parallèles entre eux entre le port de lumière interne (21) et le miroir plan (32), et entre le miroir plan (32) et le miroir convergent (22).

4. Composant selon l'une quelconque des revendications précédentes dans lequel le miroir convergent (22) est configuré pour que le faisceau lumineux (F) présente des rayons lumineux parallèles entre eux entre le port de lumière externe (31) et ledit miroir convergent (22).

5. Composant selon l'une quelconque des revendications précédentes dans lequel le miroir convergent (22) présente une distance focale f comprise entre 0,8.L et 1,2.L, L étant la longueur du trajet du faisceau lumineux (F) se propageant entre le port de lumière interne (21) et ledit miroir convergent.

6. Composant selon l'une quelconque des revendications précédentes configuré de sorte à ce que le trajet du faisceau lumineux (F) entre le port de lumière interne (21) et le miroir plan (32) traverse la deuxième face (202) en périphérie du miroir convergent (22).

7. Composant selon l'une quelconque des revendications précédentes dans lequel le port de lumière interne (21) est configuré pour émettre ou recevoir le faisceau lumineux (F) selon un axe optique présentant un angle θ compris entre 5° et 20°, typiquement 8°, vis-à-vis d'une direction normale aux deuxième et troisième faces (202, 302).

8. Composant selon l'une quelconque des revendications précédentes dans lequel le port de lumière interne (21) est choisi parmi un réseau de diffraction (21a), un miroir de renvoi associé à une extrémité d'un guide d'onde (21b), un photodétecteur (21c), un laser à cavité verticale.

9. Composant selon l'une quelconque des revendications précédentes dans lequel la couche transparente (30) présente une hauteur h prise selon une direction normale à la troisième face (302), comprise entre 50 µm et 300 µm.

10. Composant selon l'une quelconque des revendications précédentes comprenant une couche intercalaire polymère (203) entre la couche transparente (30) et le composant optique de base (20).

11. Composant selon la revendication précédente dans lequel la couche transparente (30) et le composant optique de base (20) sont à base de silice présentant un indice de réfraction n et dans lequel la couche intercalaire polymère (203) est à base d'un polymère transparent présentant un indice de réfraction nₚ tel que 0,9.n ≤ nₚ ≤ 1,1.n.

12. Composant selon l'une quelconque des deux revendications précédentes dans lequel la couche intercalaire polymère (203) remplit un espace (E) entre le miroir convergent (22) du composant optique de base (20) et la couche transparente (30).

13. Composant selon l'une quelconque des revendications 1 à 9 dans lequel la couche transparente (30) est directement au contact du composant optique de base (20) et du miroir convergent (22).

14. Système comprenant au moins un composant optique intégré (1) selon l'une quelconque des revendications précédentes et un connecteur optique (2) couplé au port de lumière externe (31).

15. Procédé de fabrication d'un composant selon l'une quelconque des revendications 10 à 12 comprenant une formation du composant optique de base (20) et du miroir convergent (22) sur un premier substrat et une formation de la couche transparente (30) et du miroir plan (32) sur un deuxième substrat, et comprenant un report et un assemblage de ladite couche transparente (30) sur le composant optique de base (20), ledit assemblage étant effectué à l'aide de la couche intercalaire polymère (203).

## Patentansprüche

1. Integrierte optische Komponente (1), die dazu konfiguriert ist, eine Ausbreitung eines Lichtbündels (F) zwischen einer ersten Lichtöffnung (21), innere Lichtöffnung genannt, und einer zweiten Lichtöffnung (31), äußere Lichtöffnung genannt, sicherzustellen, wobei das Lichtbündel (F) eine optische Achse aufweist, eine erste Oberfläche (S₁) quer zu der optischen Achse des Bündels (F) genommen, die auf der Ebene der ersten Lichtöffnung (21) genommen ist, und eine zweite Oberfläche (S'), quer zu der optischen Achse des Bündels (F) genommen, die auf der Ebene der zweiten Lichtöffnung (31) genommen ist, so dass die zweite Oberfläche (S') eine strikt größere Größe aufweist und bevorzugt mindestens drei Mal so groß ist wie die erste Oberfläche (S₁), wobei die integrierte optische Komponente (1) eine optische Basiskomponente (20) umfasst, die die innere Lichtöffnung (21, 21a, 21b, 21c) umfasst, wobei die optische Basiskomponente (20) eine erste Fläche (201), untere Fläche genannt, und eine zweite Fläche (202), obere Fläche genannt, die der unteren Fläche (201) entgegengesetzt ist, aufweist,
wobei die innere Lichtöffnung (21) dazu konfiguriert ist, das Lichtbündel (F) jeweils divergent oder konvergent gemäß einem Verlauf abzugeben oder zu empfangen, der durch die obere Fläche (202) der optischen Basiskomponente (20) durchgeht, wobei die optische Komponente (1) außerdem eine durchsichtige Schicht (30) umfasst, die auf der oberen Fläche (202) der optischen Basiskomponente (20) angeordnet ist, wobei die durchsichtige Schicht (30) eine dritte Fläche (302) gegenüber und parallel zu der oberen Fläche (202) der optischen Basiskomponente (20) aufweist, wobei die durchsichtige Schicht (30) die äußere Lichtöffnung (31) auf der Ebene der dritten Fläche (302) umfasst, und dass
die durchsichtige Schicht (30) einen Planspiegel (32) umfasst, der auf der Ebene der dritten Fläche (302) liegt und der oberen Fläche (202) der optischen Basiskomponente (20) zugewandt ist, und die optische Basiskomponente (20) einen konvergierenden Spiegel (22, 22a, 22b) umfasst, der der dritten Fläche (302) der durchsichtigen Schicht (30) zugewandt ist,
wobei der Planspiegel (32) und der konvergierende Spiegel (22) derart eingerichtet sind, dass sich das Lichtbündel (F) zwischen der inneren Lichtöffnung (21) und der äußeren Lichtöffnung (31) ausbreitet, indem es die durchsichtige Schicht (30) durch Reflexion auf dem Planspiegel (32) und durch Reflexion auf dem konvergierenden Spiegel (22) durchquert.

2. Komponente nach dem vorstehenden Anspruch, wobei der Planspiegel (32) auf dem Verlauf des Lichtbündels (F) zwischen der inneren Lichtöffnung (21) und dem konvergierenden Spiegel (22) eingefügt ist, und wobei der konvergierende Spiegel (22) auf dem Verlauf des Lichtbündels zwischen der äußeren Lichtöffnung (31) und dem Planspiegel (32) eingefügt ist.

3. Komponente nach einem der vorstehenden Ansprüche, wobei die innere Lichtöffnung (21) dazu konfiguriert ist, dass das Lichtbündel (F) Lichtstrahlen aufweist, die zueinander zwischen der inneren Lichtöffnung (21) und dem Planspiegel (32) und zwischen dem Planspiegel (32) und dem konvergierenden Spiegel (22) nicht parallel sind.

4. Komponente nach einem der vorstehenden Ansprüche, wobei der konvergierende Spiegel (22) dazu konfiguriert ist, dass das Lichtbündel (F) Lichtstrahlen aufweist, die zwischen der externen Lichtöffnung (31) und dem konvergierenden Spiegel (22) zueinander parallel sind.

5. Komponente nach einem der vorstehenden Ansprüche, wobei der konvergierende Spiegel (22) eine Brennweite f zwischen 0,8 L und 1,2 L aufweist, wobei L die Länge des Verlaufs des Lichtbündels (F) ist, das sich zwischen der inneren Lichtöffnung (21) und dem konvergierenden Spiegel ausbreitet.

6. Komponente nach einem der vorstehenden Ansprüche, die dazu konfiguriert ist, dass der Verlauf des Lichtbündels (F) zwischen der inneren Lichtöffnung (21) und dem Planspiegel (32) die zweite Fläche (202) am Umfang des konvergierenden Spiegels durchquert.

7. Komponente nach einem der vorstehenden Ansprüche, wobei die innere Lichtöffnung (21) dazu konfiguriert ist, das Lichtbündel (F) entlang einer optischen Achse abzugeben oder zu empfangen, die einen Winkel θ gegenüber einer normalen Richtung zu der zweiten und der dritten Fläche (202, 302) aufweist, der zwischen 5° und 20° liegt, in der Regel 8° beträgt.

8. Komponente nach einem der vorstehenden Ansprüche, wobei die innere Lichtöffnung (21) aus einem Beugungsgitter (21a) , einem Umlenkspiegel, der einem Ende eines Wellenleiters (21b) zugeordnet ist, einem Fotodetektor (21c) und einem Laser mit vertikalem Resonator ausgewählt ist.

9. Komponente nach einem der vorstehenden Ansprüche, wobei die durchsichtige Schicht (30) eine Höhe h entlang einer Richtung senkrecht zu der dritten Fläche (302) genommen, zwischen 50 µm und 300 µm aufweist.

10. Komponente nach einem der vorstehenden Ansprüche, die eine polymere Zwischenschicht (203) zwischen der durchsichtigen Schicht (30) und der optischen Basiskomponente (20) umfasst.

11. Komponente nach dem vorstehenden Anspruch, wobei die durchsichtige Schicht (30) und die optische Basiskomponente (20) auf Siliziumdioxid basieren, das einen Brechungsindex n aufweist, und wobei die polymere Zwischenschicht (203) auf einem durchsichtigen Polymer basiert, der einen Brechungsindex np derart aufweist, dass 0,9.n < np < 1,1.n.

12. Komponente nach einem der zwei vorstehenden Ansprüche, wobei die polymere Zwischenschicht (203) einen Raum (E) zwischen dem konvergierenden Spiegel (22) der optischen Basiskomponente (20) und der durchsichtigen Schicht (30) füllt.

13. Komponente nach einem der Ansprüche 1 bis 9, wobei die durchsichtige Schicht (30) direkt mit der optischen Basiskomponente (20) und dem konvergierenden Spiegel (22) in Kontakt steht.

14. System, das mindestens eine integrierte optische Komponente (1) nach einem der vorstehenden Ansprüche und einen optischen Steckverbinder (2), der an die äußere Lichtöffnung (31) gekoppelt ist, umfasst.

15. Verfahren zur Fertigung einer Komponente nach einem der Ansprüche 10 bis 12, das ein Bilden der optischen Basiskomponente (20) und des konvergierenden Spiegels (22) auf einem ersten Substrat, und das Bilden der durchsichtigen Schicht (30) und des Planspiegels (32) auf einem zweiten Substrat umfasst, und einen Übertrag und ein Zusammenfügen der durchsichtigen Schicht (30) auf die optische Basiskomponente (20) umfasst, wobei das Zusammenfügen mit Hilfe der polymeren Zwischenschicht (203) durchgeführt wird.

## Claims

1. Integrated optical component (1) configured to ensure a propagation of a light beam (F) between a first so-called internal light port (21) and a second so-called external light port (31), the light beam (F) having an optical axis, a first surface (S₁) taken transversally to the optical axis of the beam (F) taken at the first light port (21), and a second surface (S') taken transversally to the optical axis of the beam (F) taken at the second light port (31), such that the second surface (S') is of strictly greater size, and preferably at least three times greater than the first surface (S₁), said integrated optical component (1) comprising a base optical component (20) comprising said internal light port (21, 21a, 21b, 21c),
the base optical component (20) having a first face (201) called lower face, and a second face (202) called upper face, opposite the lower face (201),
the internal light port (21) being configured to emit or receive the light beam (F) respectively divergently or convergently, along a path passing through the upper face (202) of the base optical component (20),
the integrated optical component (1) further comprises a transparent layer (30) disposed on the upper face (202) of the base optical component (20), said transparent layer (30) having a third face (302) facing and parallel to the upper face (202) of the base optical component (20), said transparent layer (30) comprising the external light port (31) at said third face (302), and in that
the transparent layer (30) comprises a flat mirror (32) located at the third face (302) and rotated facing the upper face (202) of the base optical component (20), and the base optical component (20) comprises a convergent mirror (22, 22a, 22b) rotated facing the third face (302) of the transparent layer (30), said flat (32) and convergent (22) mirrors being arranged, such that the light beam (F) is propagated between the internal light port (21) and the external light port (31) by passing through the transparent layer (30) by reflection on the flat mirror (32) and by reflection on the convergent mirror (22).

2. Component according to the preceding claim, wherein the flat mirror (32) is interposed on the path of the light beam (F) between the internal light port (21) and the convergent mirror (22), and wherein the convergent mirror (22) is interposed on the path of the light beam between the external light port (31) and the flat mirror (32).

3. Component according to any one of the preceding claims, wherein the internal light port (21) is configured, such that the light beam (F) has light rays which are not parallel to one another between the internal light beam (21) and the flat mirror (32), and between the flat mirror (32) and the convergent mirror (22).

4. Component according to any one of the preceding claims, wherein the convergent mirror (22) is configured such that the light beam (F) has light rays which are parallel to one another between the external light port (31) and said convergent mirror (22).

5. Component according to any one of the preceding claims, wherein the convergent mirror (22) has a focal distance f of between 0.8.L and 1.2.L, L being the length of the path of the light beam (F) propagating between the internal light port (21) and said convergent mirror.

6. Component according to any one of the preceding claims, configured such that the path of the light beam (F) between the internal light port (21) and the flat mirror (32) passes through the second face (202) at the periphery of the convergent mirror (22).

7. Component according to any one of the preceding claims, wherein the internal light port (21) is configured to emit or receive the light beam (F) about an optical axis having an angle θ of between 5° and 20°, typically 8°, with respect to a direction normal to the second and third faces (202, 302).

8. Component according to any one of the preceding claims, wherein the internal light port (21) is chosen from among a diffraction grating (21a), a return mirror associated with an end of a waveguide (21b), a photodetector (21c), a vertical cavity laser.

9. Component according to any one of the preceding claims, wherein the transparent layer (30) has a height h taken in a direction normal to the third face (302), of between 50 µm and 300 µm.

10. Component according to any one of the preceding claims, comprising a polymer interlayer (203) between the transparent layer (30) and the base optical component (20).

11. Component according to the preceding claim, wherein the transparent layer (30) and the base optical component (20) are silica-based, having a refraction index n and wherein the polymer interlayer (203) is with the basis of a transparent polymer having a refraction index nₚ, such that 0.9.n ≤ nₚ ≤ 1.1.n.

12. Component according to any one of the two preceding claims, wherein the polymer interlayer (203) fills a space (E) between the convergent mirror (22) of the base optical component (20) and the transparent layer (30).

13. Component according to any one of claims 1 to 9, wherein the transparent layer (30) is directly in contact with the base optical component (20) and with the convergent mirror (22).

14. System comprising at least one integrated optical component (1) according to any one of the preceding claims and an optical connector (2) coupled to the external light port (31).

15. Method for manufacturing a component according to any one of claims 10 to 12, comprising a formation of the base optical component (20) and of the convergent mirror (22) on a first substrate and a formation of the transparent layer (30) and of the flat mirror (32) on a second substrate, and comprising a transfer and an assembly of said transparent layer (30) on the base optical component (20), said assembly being done using the polymer interlayer (203).
